(19)

Europäisches
Patentamt
European
Patent Office
Office européen
des brevets

(11) **EP 4 528 730 A1**

(12) **EUROPEAN PATENT APPLICATION**

(43) Date of publication:
**26.03.2025 Bulletin 2025/13**

(21) Application number: **23198481.6**

(22) Date of filing: **20.09.2023**

(51) International Patent Classification (IPC):
**G10L 21/0208** *(2013.01)*    **G10L 19/005** *(2013.01)*
**G10L 21/0272** *(2013.01)*    **G10L 25/30** *(2013.01)*
**G10L 25/78** *(2013.01)*

(52) Cooperative Patent Classification (CPC):
**G10L 21/0208;** G06N 20/00; G10L 19/005;
G10L 21/0216; G10L 25/30; G10L 25/78

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: NXP B.V.
**5656 AG Eindhoven (NL)**

(72) Inventors:
- **Defraene, Bruno Gabriel Paul G.**
  **5656AG Eindhoven (NL)**
- **Guatama, Temujin**
  **5656AG Eindhoven (NL)**
- **Macours, Christophe Marc**
  **5656AG Eindhoven (NL)**

(74) Representative: **Miles, John Richard**
**NXP SEMICONDUCTORS**
**Intellectual Property Group**
**Abbey House**
**25 Clarendon Road**
**Redhill, Surrey RH1 1QZ (GB)**

(54) **SYSTEM AND METHOD FOR INTERFERENCE SIGNAL REDUCTION**

(57)    An interference signal reduction system and method of interference signal reduction is described. An input signal includes a plurality of signal segments (frames). The input signal is provided to a machine learning model trained to output an estimate of a desired target signal from the input signal. Each signal segment maybe classified as a target-only signal segment, an interference-only signal segment, or an undefined signal segment. The machine learning model may be adapted based on the target-only signal segments and the interference-only signal segments.

**FIG. 1**

**Description**

FIELD

This disclosure relates to an interference signal reduction system and method of interference signal reduction.

BACKGROUND

Model-based approaches to interference signal reduction have been applied to train a machine learning model to estimate the desired target signal based on features extracted from the observed sensor signals. The machine learning model training happens off-line using approximate representative data to the actual sensor data. Once trained, the machine learning model is deployed on a processing device, where it performs interference signal reduction.

SUMMARY

Aspects of the disclosure are defined in the accompanying claims. In a first aspect, there is provided a method of interference signal reduction comprising: receiving an input signal comprising a plurality of signal segments; providing the input signal to a machine learning model configured to output an estimate of a target signal from the input signal; wherein the method further comprises: classifying each input signal segment of the plurality of signal segments as one of a target-only signal segment, an interference -only signal segment and, optionally, an undefined signal segment; and adapting the machine learning model based on the target-only signal segments and the interference-only signal segments.

In some embodiments, classifying each input signal segment further comprises: estimating a target-signal-to-interference ratio of the input signal segment; classifying the input signal segment as a target-only signal segment in response to the target-signal-to-interference ratio exceeding a first threshold value; and classifying the input signal segment as an interference-only signal segment in response to the target-signal-to-interference ratio being less than a second threshold value lower than the first threshold value.

In some embodiments, adapting the machine learning model further comprises: generating a plurality of target-plus-interference signal segments by mixing a selected target-only signal segment and a selected interference-only signal segment with a target-signal-to-interference ratio for each target-plus-interference signal segment. In some embodiments, the input signal further comprises at least one of an audio signal and a video signal. In some embodiments, the input signal further comprises an audio signal and a video signal and wherein classifying the input signal further comprises: determining a noise power from at least one audio component of the input signal segment; classifying the input signal segment as a target-only signal segment in response to the noise power being less than a noise power threshold value and detecting voice activity from a video component of the input signal segment; and classifying the input signal segment as an interference-only signal segment in response to the noise power being greater than the noise power threshold value and not detecting voice activity from the video component of the input signal segment. In some embodiments, adapting the machine learning model further comprises: generating a plurality of target-plus-interference signal segments; wherein the audio component of a target-plus-interference signal segment is generated by mixing the audio component of a selected target-only signal segment and the audio component of a selected interference-only signal segment with a target-signal-to-interference ratio ; and the video component of the target-plus-interference signal segment comprises the video component of the selected target-only signal segment.

In some embodiments, adapting the machine learning model further comprises: constructing a target-plus-interference data set from the plurality of target-plus-interference signal segments; constructing a target-only signal data set from the respective selected target-only signal segment of each target-plus-interference signal segment; and applying the target-plus-interference data set and the target-only signal data set to the machine learning model.

In some embodiments, the input signal comprises a digital audio signal, wherein the input signal segment comprises an audio packet including a plurality of audio samples and wherein classifying the input signal segment further comprises: classifying the input signal segment as a target-only signal segment in response to the audio packet being correctly received; and classifying the input signal segment as an interference-only signal segment in response to the audio packet being incorrectly received.

In some embodiments, the method further comprises: updating at least one parameter of a packet loss pattern model with the interference-only signal segments. In some embodiments, adapting the machine learning model further comprises: constructing a target-only signal data set from a plurality of selected target-only signal segments; constructing a target-plus-interference data set by muting a subset of the plurality of selected target-only signal segments according to the pattern loss packet model ; and applying the target-plus-interference data set and the target-only signal data set to the machine learning model.

In some embodiments, the method further comprises: storing target-only and interference-only signal segments in separate databases. In some embodiments, the databases are modified to stay within a predefined size after storing additional signal segments In some embodiments, the method further comprises: receiving a further input signal comprising a plurality of further signal segments; providing the further input signal to the machine learning model further configured to output an estimate of a further target signal from the further input signal; classifying each further input signal segment of the plurality of further signal segments as one of a target-only signal segment, an interference-only signal segment and, optionally, an undefined signal segment; and adapting the machine learning model based on the target-only signal segments and the interference-only signal segments.

In a second aspect, there is provided an interference signal reduction system comprising: a signal input configured to receive an input signal comprising a plurality of signal segments; an interference signal reduction system output; a target signal estimator configured to output an estimate the target signal from the input signal, the target signal estimator comprising a machine learning model and having a target signal estimator input coupled to the signal input, a target signal estimator output coupled to the interference signal reduction system output, and an adaptor input; a signal classifier having a signal classifier input coupled to the signal input, a target signal output, and interference signal output; an adaptor having a target signal input coupled to the target signal output, an interference signal input coupled to the interference signal output, and a model adaptor output coupled to the adaptor input; wherein the signal classifier is configured to classify each input signal segment of the plurality of signal segments as one of a target-only signal segment, an interference-only signal segment and, optionally, an undefined signal segment; and the adaptor is configured to adapt the machine learning model based on the target-only signal segments and the interference-only signal segments.

In some embodiments, the signal classifier is further configured to: estimate a target-signal-to-interference ratio of the input signal segment; classify the input signal segment as a target-only signal segment in response to the target-signal-to-interference ratio exceeding a first threshold value; and classify the input signal segment as an interference-only signal segment in response to the target-signal-to-interference ratio being less than a second threshold value lower than the first threshold value.

In some embodiments, the adaptor is further configured to: generate a plurality of target-plus-interference signal segments by mixing a selected target-only signal segment and a selected interference-only signal segment with a target-signal-to-interference ratio for each target-plus-interference signal segment.

In some embodiments, the input signal further comprises an audio signal and a video signal and wherein the signal classifier is further configured to: determine a noise power from at least one audio component of the input signal segment; classify the input signal segment as a target-only signal segment in response to the noise power being less than a noise power threshold value and voice activity being detected from a video component of the input signal segment; and classify the input signal segment as an interference-only signal segment in response to estimated noise power being greater than the noise power threshold value and no voice activity being detected from the video component of the input signal segment.

In some embodiments, the adaptor is further configured to generate a plurality of target-plus-interference signal segments; wherein the audio component of a target-plus-interference signal segment is generated by mixing the audio component of a selected target-only signal segment and the audio component of a selected interference-only signal segment with a target-signal-to-interference ratio; and the video component of the target-plus-interference signal segment comprises the video component of the selected target-only signal segment.

In some embodiments, the adaptor is further configured to: construct a target-plus-interference data set from the plurality of target-plus-interference signal segments; construct a target-only signal data set from the respective selected target-only signal segment of each target-plus-interference signal segment; and apply the target-plus-interference data set and the target-only signal data set to the machine learning model.

In some embodiments, the input signal comprises a digital audio signal, the input signal segment comprises an audio packet including a plurality of audio samples, and wherein the signal classifier is further configured to: classify the input signal segment as a target-only signal segment in response to the audio packet being correctly received; classify the input signal segment as an interference-only signal segment in response to the audio packet being incorrectly received; and update at least one parameter of a packet loss pattern model with the interference-only signal segments; and wherein the adaptor is further configured to: construct a target-only signal data set from a plurality of selected target-only signal segments; construct a target-plus-interference data set by muting a subset of the plurality of selected target-only signal segments according to the pattern loss packet model; and apply the target-plus-interference data set and the target-only signal data set to the machine learning model.

BRIEF DESCRIPTION OF THE DRAWINGS

In the figures and description like reference numerals refer to like features. Embodiments are now described in detail, by way of example only, illustrated by the accompanying drawings in which:

Figure 1 shows an interference signal reduction system according to an embodiment.

Figure 2 illustrates a method of interference signal reduction according to an embodiment.

Figure 3 shows an interference signal reduction system according to an embodiment.

Figure 4 illustrates a method of signal classification for interference signal reduction according to an embodiment.

Figure 5 shows a method of adapting an interference reduction system according to an embodiment.

Figure 6 illustrates a method of audio and video signal classification for interference signal reduction according to an embodiment.

Figure 7 shows a method of adapting an interference reduction system according to an embodiment.

Figure 8 illustrates a method of digital audio signal classification for interference signal reduction according to an embodiment.

Figure 9 shows a method of adapting an interference reduction system according to an embodiment.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

DETAILED DESCRIPTION OF EMBODIMENTS

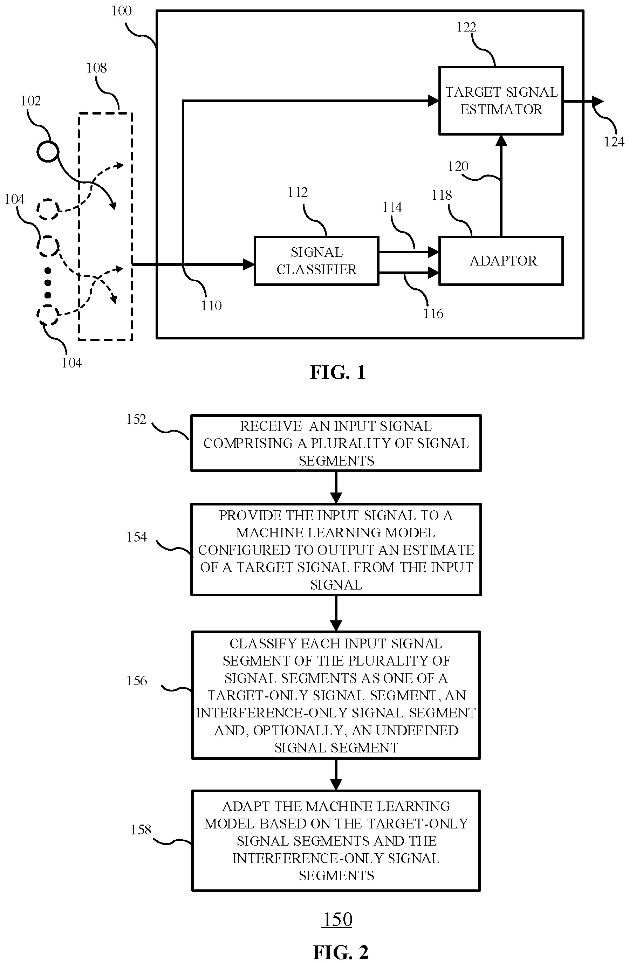

Figure 1 shows an interference signal reduction system 100 according to an embodiment. A signal input 110 may be connected to a signal classifier input of a signal classifier 112 and a target signal estimator input of a target signal estimator 122 which is implemented as a machine learning model. The signal classifier 112 may have a target signal output 114 and an interference signal output 116 connected to a respective target signal input and interference signal input of an adaptor 118. The adaptor 118 may have an adaptor output 120 connected to an adaptor input of the target signal estimator 122. The target signal estimator 122 has a target signal estimator output connected to an interference signal reduction system output 124.

In operation, a signal may be received at signal input 110. The signal comprises a target signal from a source 102 which may be degraded by one or more interference sources 104 illustrated as interference process 108.

Figure 2 illustrates a method of interference signal reduction 150 which may for example be implemented by interference reduction system 100. In step 152 an input signal including a target signal from a source 102 which may be degraded by one or more interference sources may be received at signal input 110. The received signal may be initially detected by a sensor (not shown) which, depending on the type of target signal may be one or more of a microphone, a camera, and an antenna.

The received signal may be processed for example by converting the analog signal to a digital signal and provided to the target signal estimator 122 which is implemented as a machine learning model configured to output an estimate of a target signal from the input signal (step 154). The input signal may be considered to consist of a number of signal segments. For example in the digital domain, the input signal segment may consist of a number N of signal samples corresponding to a certain predetermined time duration. The target signal estimator 122 may then output an estimate of the target (desired) signal from the received signal on the interference signal reduction system output 124 for each signal segment.

In step 156, the signal classifier 112 may classify a signal segment of the input signal segment as one of a target-only signal segment, an interference-only signal segment and optionally an undefined signal segment. The target-only signal segments may be output on the target signal output 114 and the interference only signal segments may be output on the interference signal output 116. The undefined signal segments may be discarded. The adaptor 118 may adapt the machine learning model based on the target-only signal segments and the interference-only signal segments by constructing a training data set which is used to update the parameters of the machine learning model. The update process typically requires one or more iterations consisting of a forward step of applying input data to the machine learning model and observing the output and a backpropagation step where the machine learning model outputs to the reference outputs from the training set, and adapts model parameters to minimize the difference between the reference outputs and the model outputs. In some examples, the forward-backward iterations may be applied to a copy of the machine learning model in the adaptor 118 which then replaces the machine learning model in target signal estimator 122. In other examples, the forward-backward iterations may be applied by the adaptor 118 directly to the machine-learning model in the target signal estimator 122 during a down-time period . Steps 152 and 154 may be implemented in software running as foreground processes on a processor. Steps 156 and 158 may be implemented in software running as a background process on the processor.

The interference reduction system 100 and method 150 may allow on-system machine learning for interference signal reduction. In some examples, the system 100 may be implemented as a system-on-chip (SoC), microprocessor, microcontroller or other integrated circuit device. The machine learning model may be trained or adapted online using the actual sensor signal data collected on the system. The interference reduction system 100 and method 150 may allow personalization of interference signal reduction machine learning models towards potentially dynamic target and interference signal characteristics specific to the device/system, the user and/or environment i.e. personalized machine learning.

For examples where the system 100 is implemented on a device, the system 100 allows the learning or adaptation of interference signal reduction machine learning models to be performed fully on-device, without necessity for data exchange or processing externally to the device i.e. privacy-preserving machine learning.

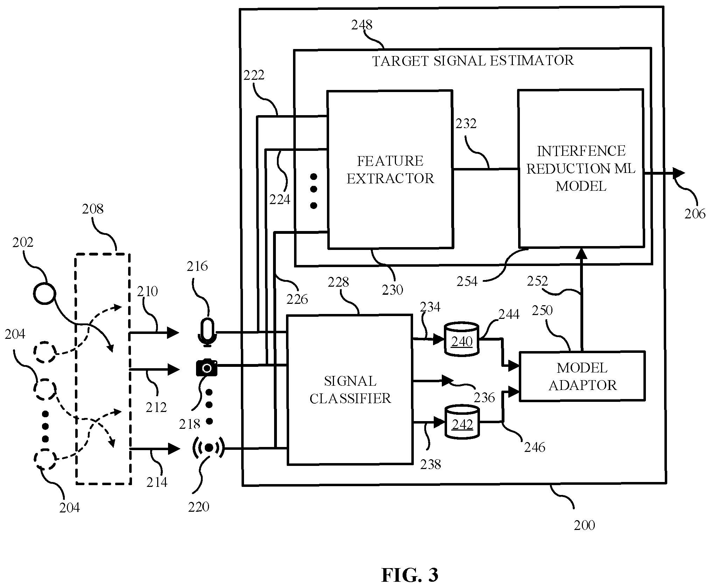

Figure 3 shows an interference signal reduction system 200 according to an embodiment. Signal inputs 222, 224, 226 for different signal types may be connected to a respective signal classifier input of a signal classifier 228 and a respective target signal estimator input of a target signal estimator 248 which includes a feature extractor 230 and an interference reduction machine learning model 254. The feature extractor 230 transforms the signal inputs into input features output on the feature extraction output 232, which are the inputs to the interference reduction ML model 254. The feature extractor 230 may compute one or more feature vectors using temporal or spectral processing and transformations. Several feature vectors can be combined or concatenated to form a single input feature vector. The signal classifier 228 may have a target signal output 234 connected to an input of target signal store 240 (memory) for the database of target-only signal segments and an interference signal output 238 connected to an input of an interference signal store 242 (memory) for the database of interference-only signal segments. In some examples the target signal store and interference signal store may be included in the model adaptor 250. The signal classifier 228 may have an undefined signal output 236. The output 244 of target signal store 240 may be connected to target signal input of a model adaptor 250. The output 246 of target signal store 242 may be connected to target signal input of the model adaptor 250. The model adaptor 250 may have a model adaptor output 252 connected to an adaptor input of the interference reduction machine learning model 254. The feature extractor 230 has a feature extraction output 232 connected to an input of the interference reduction machine learning model 254. The output of the interference reduction machine learning model 254 is connected to an interference signal reduction system output 206.

A target source 202 and interference source(s) 204 are combined during a physical interference process 208, resulting in signals 210, 212, 214 which may be detected by respective sensors 216, 218, 220 observing a mixture of the desired target signal and the undesired interference signal(s). The aim of the interference signal reduction system 200 is the removal of undesired interference signals, while retaining the desired target signal based on the observed sensor signals. The input signal or signals may be received at signal inputs 222, 224, 226. The received signal may be initially detected by a sensor which, depending on the type of target signal may for example be a microphone 216, a camera 218, and an antenna 220. The interference signal reduction system 200 illustrates three different types of signals i.e. audio signal 210, video signal 212 and radio frequency (RF) signal 214 which may be processed. In other examples, fewer or more signal types may be processed.

The received signals may be processed for example by converting the sensor signal to a digital signal and provided to the target signal estimator 248 configured to output an estimate of a target signal from the input signals. Each of the input signal types may be considered to consist of a number of signal segments. For example in the digital domain, an input signal segment may consist of a number N of signal samples corresponding to a certain predetermined time duration. The target signal estimator 248 may then output an estimate of the target (desired) signal from the received signal on the interference signal reduction system output 206 for each signal segment.

The inputs to the interference reduction machine learning model 254 consist of features, extracted from the sensor signals by feature extractor 230. In a background process, the interference reduction machine learning model 254 may be adapted through application of a signal classification process by signal classifier 228 and a model adaptation process by model adaptor 250. The signal classifier 228 may make a relatively coarse classification based on the input sensor signals. The signal classifier 228 may detect the presence of target-only signal or interference-only signal conditions, and in these cases, the respective resulting sensor signal segments output on the target signal output 234 and interference signal output 238 are stored in the respective target signal store 240 or interference signal store 242 as target signal segments or interference signal segments, respectively. In all other signal conditions, the sensor signal segments are not stored as they are not representative of the target signal or the interference signal but may be output on undefined signal output 236. As the signal classifier 228 is designed to detect relatively extreme signal conditions, a complex or adaptive approach is not required; instead relatively simple and fixed implementations can suffice. In the model adaptation process, the stored target signal representations and interference representations may be used to optimize the interference signal reduction performance of the machine learning model for these measured target signal and interference signal conditions.

Different embodiments may have selected implementations of the following aspects:
Sensor configuration: which sensors are used for the background signal classification process, and which are used for the foreground interference reduction process.

Signal classification method: which method is used to decide at which time instances a target signal representation or interference signal representation will be collected.

Estimated signal representations: which type of signal representations are extracted from the on-device sensors signals.

Model adaptation method: which method is used to update the machine learning model based on the collected target signal representations and/or interference signal representations.

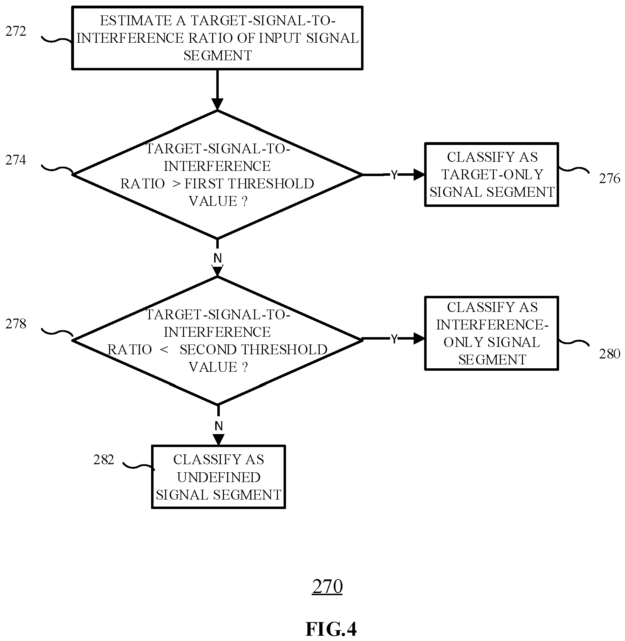

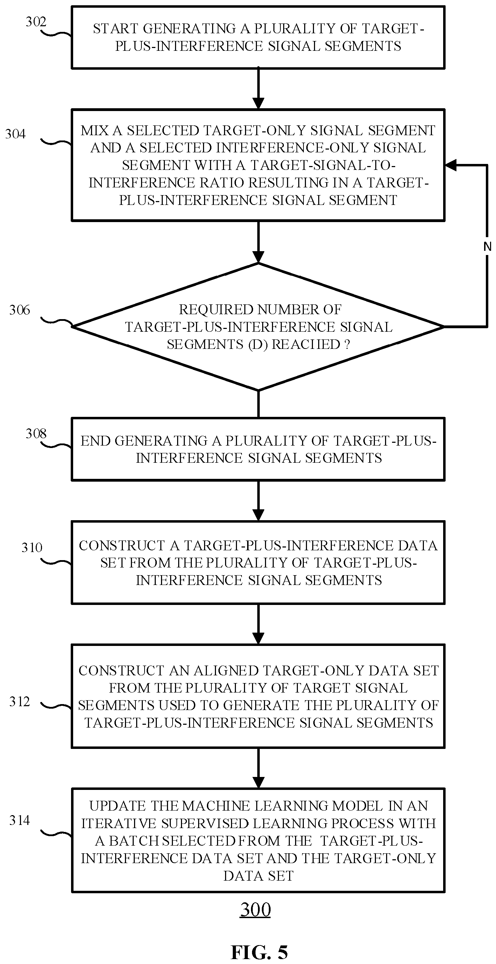

Figure 4 shows a signal classification method 270 and figure 5 shows a model adaption method 300 which may be implemented for example by interference reduction systems 100, 200. Methods 270 and 300 may be used for example where the target source is speech, with acoustic interference source(s) being present, e.g. environmental noise, or acoustic echo coupling from loudspeaker to the microphone. The sensor configuration is unimodal: the sensors consist of one or more microphones. In this case, all microphone signals would be typically used for both the signal classification background process, as for the interference reduction foreground process. The microphone sensors pick up a mixture of the desired speech signal and the undesired interference signals. Methods 270, 300 are for the case of a single microphone sensor. In other examples, a similar approach can be applied in the case of multiple microphone sensors.

The signal classification process is based on a target-signal-to-interference ratio estimation of the microphone sensor signal s(n), where n is the discrete time index. In a first step, the signal s(n) is buffered into an N-sample signal frame also referred to herein as a signal segment, and the analysis is performed on the resulting signal segment $\mathbf{s}_k = [s((k-1) * N), s((k-1) * N + 1),..., s(k * N - 1)]$, where k = 1, 2, ..., K is the segment index. In step 272 the target-signal-to-interference ratio may be estimated. The target-signal-to-interference ratio estimation $\gamma_k = g(\mathbf{s}_k)$ can be implemented using any state-of-the-art method, for example the statistical WADA-SNR algorithm which uses waveform amplitude distribution analysis to estimate the signal-to-noise ratio of speech signals. The resulting estimate $\gamma_k$ can then be used in a simple threshold logic for signal classification:

$$\mathbf{s}_k = \begin{cases} \text{target signal} & \gamma_k > T^{hi} \\ \text{undefined signal} & T^{lo} \leq \gamma_k \leq T^{hi} \\ \text{interference signal} & \gamma_k < T^{lo} \end{cases}$$

In step 274 the target signal-to-interference ratio is compared with the upper threshold $T^{hi}$. If the target signal-to-interference ratio exceeds the upper threshold the signal segment $\mathbf{s}_k$ is classified as a target-only signal segment (step 276) and the signal $\mathbf{s}_k$ is stored as a target signal representation. Otherwise in step 278 the target signal-to-interference ratio is compared with the lower threshold $T^{lo}$. If the signal-to-interference ratio falls below the lower threshold $T^{lo}$, the signal segment $\mathbf{s}_k$ is classified as an interference-only signal segment (step 280). The signal segment $\mathbf{s}_k$ is stored as an interference signal representation. In other cases (step 282), the signal segment $\mathbf{s}_k$ is classified as an undefined signal, which could be a mixture of target and interference, or the absence of both target and interference.

Turning now to figure 5, the model adaptation method 300 uses the stored target signal representations and the interference signal representations in a synthetic signal mixing process to generate a plurality of target-plus-interference signal segments. The method starts in step 302. In step 304 a target signal and an interference signal are selected from the stored representations, and the two signals are mixed with a selected signal-to-interference ratio resulting in a target-plus-interference signal segment. The signal selection and the signal-to-interference ratio selection may be determined for example according to predefined settings, or using a form of pseudo-random number generation within predefined range. The resulting target-plus-interference signal segment is stored, and also the equivalent clean target signal is stored as reference. In step 306 a check is made to determine if the process has been repeated sufficiently a number D times. If it has then the target-plus-interference signal segment generation stops (step 308), otherwise the process returns to step 304 and repeats. Hence, the synthetic signal mixing process is repeated D times resulting in a target-plus-interference mixture dataset $\mathbf{M} = [\mathbf{m}_1^T, \mathbf{m}_2^T, ..., \mathbf{m}_D^T]$ (step 310) and an aligned clean target signal dataset $\mathbf{C} = [\mathbf{c}_1^T, \mathbf{c}_2^T, ..., \mathbf{c}_D^T]$ (step 312).

The target-plus-interference mixture dataset $\mathbf{M}$ and the clean target signal dataset $\mathbf{C}$ are used in step 314 to update the machine learning model in an iterative supervised learning process. In each iteration of the supervised learning process, a batch of mixture signals $\mathbf{M}_i$ is constructed containing a subset of batch size B signals from the full dataset $\mathbf{M}$. Accordingly, a batch of aligned clean target signals $\mathbf{C}_i$ is constructed containing a subset of batch size B signals from the full dataset $\mathbf{C}$. Given current machine learning model f() with model parameters $\theta_{i-1}$, a model adaptation step with a step size $\mu$

is performed in each iteration i:

$$\boldsymbol{\theta_i} = \boldsymbol{\theta_{i-1}} + \mu\, \Delta\boldsymbol{\theta_i},$$

where

$$\Delta\boldsymbol{\theta_i} = \underset{\Delta}{\arg\min}\, \mathcal{L}(f(\mathbf{M_i}; \boldsymbol{\theta_{i-1}} + \Delta, \mathbf{C_i}),$$

and where the data batches $\mathbf{M_i}$ and $\mathbf{C_i}$ are used to optimize the machine learning model parameter change $\Delta\theta_i$, in order to minimize the loss function $\mathcal{L}$, measuring the interference cancellation quality on the signal batch $\mathbf{M_i}$ and the target batch $\mathbf{C_i}$ and $\Delta$ is an optimization variable. This optimization problem may be solved for example using known gradient descent methods and backpropagation techniques.

The model adaptation process may be considered complete depending on a stopping criterion, for example based on one or more of the following:

a maximum number of iterations I of the supervised learning process have been run;

a target loss value or target loss value improvement has been achieved.

Upon completion of the model adaptation process, the adapted machine learning model may replace the previous model in the foreground process, and the interference reduction is performed with the adapted machine learning model. The model adaptation process can be scheduled to be run for example at fixed time intervals using the latest sensor data, or whenever a sufficient amount of new target and interference data has been collected, or based on a user input requesting to update the model.

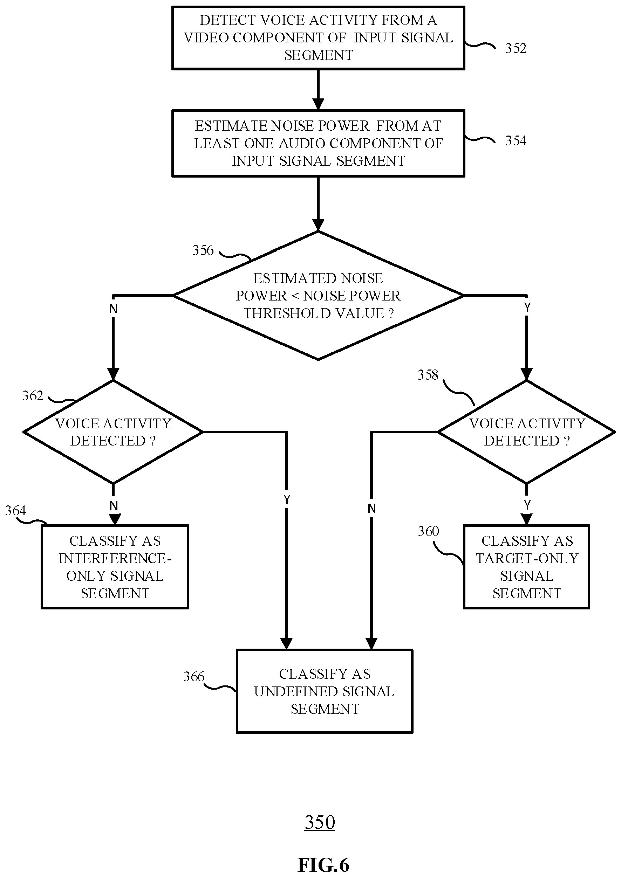

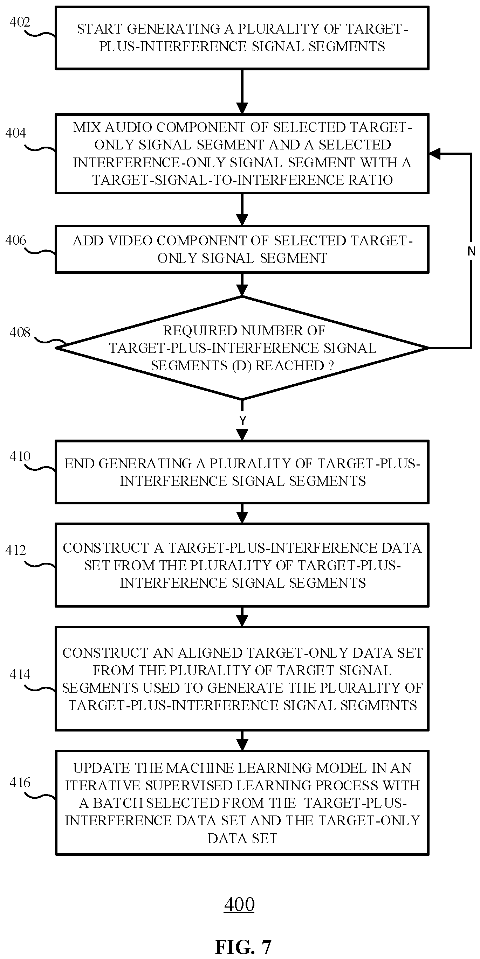

Figure 6 shows a signal classification method 350 and figure 7 shows a model adaption method 400 which may be implemented for example by interference signal reduction system 200. The target speech and acoustic interference sources are similar as for methods 250, 300. The sensor configuration however is in this case multimodal: the sensors consist of one or more microphones, and additionally one or more camera sensors. All sensor signals are typically used for both the signal classification background process, as for the interference reduction foreground process. The microphone sensors pick up a mixture of the desired speech signal and the undesired acoustic interference signals. The camera sensors pick up relevant visual information related to the desired speech signal, e.g. dynamic facial characteristics of the talker, and are mostly insensitive to the acoustic interference signals. In this embodiment, we detail the implementation of the invention for the case of a single microphone sensor, and a single camera sensor. It is understood similar approach can be applied in the case of multiple microphones and camera sensors.

The signal classification process is now based on both the microphone signal segment which is also referred to as an audio component of the input signal segment, $\mathbf{s}_k^{mic}\,[s((k-1)*N)$, s((k - 1) * N + 1),..., s(k * N - 1)], and the corresponding camera signal segment or segments $\mathbf{s}_k^{cam}$, also referred to as a video component of the input signal segment typically represented as the RGB values for the different pixels in the image frame. One implementation of the signal classification process is to have a binary voice activity detector $v_k = g^{vad}(\mathbf{s}_k^{cam})$ operating on the camera signal segment, and a noise power estimation $n_k = g^{noise}(\mathbf{s}_k^{mic})$ operating on the microphone signal segment. The voice activity detector can be implemented using state-of-the-art detectors based on head and lip movement tracking. The noise power estimation can similarly be implemented using a state-of-the-art noise power tracking algorithm. Signal classification is based on a combination logic using both the voice activity detector $v_k$ and the noise power estimation $n_k$, for example:

**EP 4 528 730 A1**

$$s_k^{\{cam,mic\}} = \begin{cases} \text{target signal} & v_k = 1 \text{ and } n_k < T^{noise} \\ \text{interference signal} & v_k = 0 \text{ and } n_k > T^{noise} \\ \text{undefined signal} & \text{else} \end{cases}$$

In step 352 a level of voice activity is detected on a video component $s_k^{cam}$ of the input signal segment $s_k^{\{cam,mic\}}$. In step 354 the noise power $n_k$ is estimated from at least one audio component $s_k^{mic}$ of the input signal segment $s_k^{\{cam,mic\}}$. In step 356, a comparison is made between the noise power estimate and threshold value. In case the noise power estimation is below the threshold $T^{noise}$ and voice activity is detected in subsequent step 358, the signals $s_k^{cam}$ and $s_k^{mic}$ are classified as target-only signal segments (step 360) and may be stored in a target-only signal database as target signal representations. If voice activity is not detected in step 358, the signal segment is classified as an undefined signal segment (step 366). Returning to step 356, in case the noise power estimation exceeds the threshold $T^{noise}$ and voice activity is not detected in subsequent step 362, the signals $s_k^{cam}$ and $s_k^{mic}$ are classified as interference-only signal segments (step 364). The signal $s_k^{mic}$ is stored as an interference signal representation; the signal $s_k^{cam}$ is not stored as it does not bear information related to the acoustic interferences. If voice activity is detected in step 362, the signal segment is classified as an undefined signal segment (step 366).

Turning now to figure 7, the model adaptation method 400 is mostly similar as described previously for the unimodal speech enhancement case. The model adaptation method 400 uses the stored target signal representations and the interference signal representations in a synthetic signal mixing process to generate a plurality of target-plus-interference signal segments. The method starts in step 402. In step 404 a target signal and an interference signal are selected from the stored representations, and the audio components of the two signals are mixed with a selected signal-to-interference ratio resulting in a target-plus-interference signal segment. The signal selection and the signal-to-interference ratio selection may be determined for example according to predefined settings, or using a form of pseudo-random number generation within predefined range. The video component of the selected target-only signal segment is concatenated with the audio component of the target-plus-interference signal segment in step 406, forming the target-plus-interference signal segment. The audio component of the target-only signal is stored as reference. In step 408 a check is made to determine if the process has been repeated sufficiently a number D times. If it has then the target-plus-interference signal segment generation stops (step 410), otherwise the process returns to step 404 and repeats. Hence, the synthetic signal mixing process is repeated D times resulting in a target-plus-interference mixture dataset M (step 412) and an aligned clean target signal dataset C (step 414). The target-plus-interference mixture dataset **M** (microphone and camera) and the clean target signal dataset **C** (microphone) are used in step 416 to update the machine learning model in an iterative supervised learning process similarly as previously described for method 300.

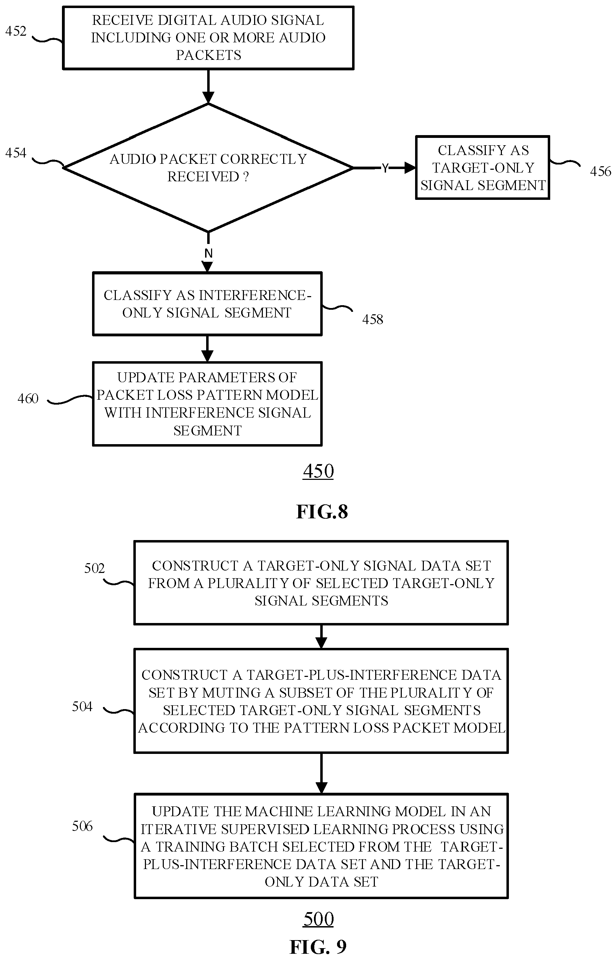

Figure 8 shows a signal classification method 450 and figure 9 shows a model adaption method 500 which may be implemented for example by interference reduction systems 100, 200. In this embodiment the target signal is an audio stream, and there is an interference pattern of lost audio packets missing from the audio stream. Audio packet loss concealment is the restoration of these gaps in audio streams caused by data transmission failures in packet switched networks. The sensor configuration is unimodal: a stream of audio packets are received by the interference reduction system. The foreground interference reduction machine learning model estimates the audio signal samples which are missing from the audio stream, based on knowledge of the received signal samples.

Referring to figure 8, in step 452 a digital audio signal including one or more audio packets are received. In step 454, a check is made to determine whether the audio packet was correctly received. If an audio packet was received correctly, the target signal is present and the interference signal is absent. The signal frame $s_k = [s((k-1) * N), s((k-1) * N + 1), ..., s(k * N - 1)]$ is classified as a target-only signal segment (step 456). If the audio packet was not received correctly, the target signal is absent and the interference signal is present and the interference signal segment is classified as an interference-only signal segment (step 458). The information on the missing packet pattern is used to update the parameters of a packet loss pattern model, which serves as an interference signal representation (step 460). As an example, a two-state first order Markov chain, also called Gilbert-Elliott channel, is often used to model packet loss

8

patterns. This model has two parameters, i.e. the transition probability p from 'missing packet state' to 'received packet state', and the transition probability q from 'received packet state' to 'missing packet state'. Updating the model parameters based on the observed packet loss patterns can be performed using state-of-the-art methods, e.g. Maximum Likelihood Estimation. The method 450 may be repeated for a number of audio packets.

Model adaption method 500 uses a generative data mixing process. The target-only signal segments are used to construct a clean target-only signal dataset **C** (step 502). A target-plus-interference dataset **M** is constructed by muting a subset of the plurality of selected target-only signal segments according to the pattern loss packet model (step 504). Batches of pairs of clean audio streams from dataset **C** and corresponding audio streams with model-generated packet losses from dataset **M** can be used to update the interference reduction machine learning model using a supervised learning approach (step 506) as described previously for methods 300, 400.

Embodiments of system and method is described to train models for interference signal reduction on-system, using signal data collected through sensors . A relatively coarse signal classification stage may classify signal segments or frames as target-only and interference-only signal representations. These signal representations are used to optimize interference reduction model performance towards these signal conditions through a model adaptation stage.

Some embodiments may be used for blind source separation in which there may be multiple target signal sources which could all be desired. The invention can be applied in the case of blind source separation to detect presence of the different target sources using the signal classification process, and adapt a blind source separation machine learning system based on an extracted representation of each of the target sources.

Embodiments may allow model personalization towards target and interference signal characteristics specific to the system/device, user and/or environment. Where the interference reduction system is implemented on a device, the learning process is executed fully on-device, without necessity for data exchange or processing externally to the device.

An interference signal reduction apparatus and method of interference signal reduction is described. An input signal includes a plurality of signal segments (frames). The input signal is provided to a machine learning model trained to output an estimate of a desired target signal from the input signal. Each signal segment maybe classified as a target-only signal segment, an interference-only signal segment, or an undefined signal segment. The machine learning model may be adapted based on the target-only signal segments and the interference-only signal segments.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

**Claims**

1.  A method of interference signal reduction comprising:

    receiving an input signal comprising a plurality of signal segments;
    providing the input signal to a machine learning model configured to output an estimate of a target signal from the input signal;
    wherein the method further comprises:

    classifying each input signal segment of the plurality of signal segments as one of a target-only signal segment, an interference-only signal segment and, optionally, an undefined signal segment; and
    adapting the machine learning model based on the target-only signal segments and the interference-only signal segments.

2.  The method of claim 1, wherein classifying each input signal segment further comprises:

    estimating a target-signal-to-interference ratio of the input signal segment;
    classifying the input signal segment as a target-only signal segment in response to the target-signal-to-interference ratio exceeding a first threshold value; and
    classifying the input signal segment as an interference-only signal segment in response to the target-signal-to-interference ratio being less than a second threshold value lower than the first threshold value.

3.  The method of any preceding claim, wherein adapting the machine learning model further comprises:
    generating a plurality of target-plus-interference signal segments by mixing a selected target-only signal segment and a selected interference-only signal segment with a target-signal-to-interference ratio for each target-plus-interference signal segment.

4.  The method of any preceding claim, wherein the input signal further comprises at least one of an audio signal and a video signal.

5.  The method of claim 1, wherein the input signal further comprises an audio signal and a video signal and wherein classifying each input signal segment further comprises:

    determining a noise power from an audio component of the input signal segment;
    classifying the input signal segment as a target-only signal segment in response to the noise power being less than a noise power threshold value and voice activity being detected from a video component of the input signal segment; and
    classifying the input signal segment as an interference-only signal segment in response to the noise power being greater than the noise power threshold value and no voice activity being detected from the video component of the input signal segment.

6.  The method of claim 5, wherein adapting the machine learning model further comprises:

    generating a plurality of target-plus-interference signal segments;
    wherein the audio component of a target-plus-interference signal segment is generated by mixing the audio component of a selected target-only signal segment and the audio component of a selected interference-only signal segment with a target-signal-to-interference ratio; and
    the video component of the target-plus-interference signal segment comprises the video component of the selected target-only signal segment.

7.  The method of claims 3 or 6, wherein adapting the machine learning model further comprises:

    constructing a target-plus-interference data set from the plurality of target-plus-interference signal segments;
    constructing a target-only signal data set from the respective selected target-only signal segment of each target-plus-interference signal segment; and

applying the target-plus-interference data set and the target-only signal data set to the machine learning model.

8. The method of claim 1, wherein the input signal comprises a digital audio signal, wherein each input signal segment comprises an audio packet including a plurality of audio samples and wherein classifying each input signal segment further comprises:

classifying the input signal segment as a target-only signal segment in response to the audio packet being correctly received; and

classifying the input signal segment as an interference-only signal segment in response to the audio packet being incorrectly received.

9. The method of claim 8 further comprising: updating at least one parameter of a packet loss pattern model with the interference-only signal segments.

10. The method of claim 9, wherein adapting the machine learning model further comprises:

constructing a target-only signal data set from a plurality of selected target-only signal segments;

constructing a target-plus-interference data set by muting a subset of the plurality of selected target-only signal segments according to the pattern loss packet model; and

applying the target-plus-interference data set and the target-only signal data set to the machine learning model.

11. The method of any preceding claim further comprising receiving a further input signal comprising a plurality of further signal segments;

providing the further input signal to the machine learning model further configured to output an estimate of a further target signal from the further input signal;

wherein the method further comprises:

classifying each further input signal segment of the plurality of further signal segments as one of a target-only signal segment, an interference-only signal segment and, optionally, an undefined signal segment; and

adapting the machine learning model based on the target-only signal segments and the interference-only signal segments.

12. An interference signal reduction system comprising:

a signal input configured to receive an input signal comprising a plurality of signal segments;

an interference signal reduction system output;

a target signal estimator configured to output an estimate the target signal from the input signal, the target signal estimator comprising a machine learning model and having a target signal estimator input coupled to the signal input, a target signal estimator output coupled to the interference signal reduction system output, and an adaptor input;

a signal classifier having a signal classifier input coupled to the signal input, a target signal output, and interference signal output;

an adaptor having a target signal input coupled to the target signal output, an interference signal input coupled to the interference signal output, and a model adaptor output coupled to the adaptor input;

wherein the signal classifier is configured to classify each input signal segment of the plurality of signal segments as one of a target-only signal segment, an interference-only signal segment and, optionally, an undefined signal segment; and

the adaptor is configured to adapt the machine learning model based on the target-only signal segments and the interference-only signal segments.

13. The interference signal reduction system of claim 12 wherein the signal classifier is further configured to:

estimate a target-signal-to-interference ratio of the input signal segment;

classify the input signal segment as a target-only signal segment in response to the target-signal-to-interference ratio exceeding a first threshold value; and

classify the input signal segment as an interference-only signal segment in response to the target-signal-to-interference ratio being less than a second threshold value lower than the first threshold value.

14. The interference signal reduction system of claim 13 wherein the adaptor is further configured to:
generate a plurality of target-plus-interference signal segments by mixing a selected target-only signal segment and a selected interference-only signal segment with a target-signal-to-interference ratio for each target-plus-interference signal segment.

15. The interference signal reduction system of claim 12 wherein the input signal further comprises an audio signal and a video signal and wherein the signal classifier is further configured to:

determine a noise power from an audio component of the input signal segment;
classify the input signal segment as a target-only signal segment in response to the noise power being less than a noise power threshold value and voice activity being detected from a video component of the input signal segment; and
classify the input signal segment as an interference-only signal segment in response to estimated noise power being greater than the noise power threshold value and no voice activity being detected from the video component of the input signal segment.

FIG. 1

**RECEIVE AN INPUT SIGNAL COMPRISING A PLURALITY OF SIGNAL SEGMENTS**

**PROVIDE THE INPUT SIGNAL TO A MACHINE LEARNING MODEL CONFIGURED TO OUTPUT AN ESTIMATE OF A TARGET SIGNAL FROM THE INPUT SIGNAL**

**CLASSIFY EACH INPUT SIGNAL SEGMENT OF THE PLURALITY OF SIGNAL SEGMENTS AS ONE OF A TARGET-ONLY SIGNAL SEGMENT, AN INTERFERENCE-ONLY SIGNAL SEGMENT AND, OPTIONALLY, AN UNDEFINED SIGNAL SEGMENT**

**ADAPT THE MACHINE LEARNING MODEL BASED ON THE TARGET-ONLY SIGNAL SEGMENTS AND THE INTERFERENCE-ONLY SIGNAL SEGMENTS**

150

FIG. 2

FIG. 3

ESTIMATE A TARGET-SIGNAL-TO-INTERFERENCE RATIO OF INPUT SIGNAL SEGMENT

272

TARGET-SIGNAL-TO-INTERFERENCE RATIO > FIRST THRESHOLD VALUE ?

274

CLASSIFY AS TARGET-ONLY SIGNAL SEGMENT

276

Y

N

TARGET-SIGNAL-TO-INTERFERENCE RATIO < SECOND THRESHOLD VALUE ?

278

CLASSIFY AS INTERFERENCE-ONLY SIGNAL SEGMENT

280

Y

N

CLASSIFY AS UNDEFINED SIGNAL SEGMENT

282

270

**FIG.4**

**302** START GENERATING A PLURALITY OF TARGET-PLUS-INTERFERENCE SIGNAL SEGMENTS

**304** MIX A SELECTED TARGET-ONLY SIGNAL SEGMENT AND A SELECTED INTERFERENCE-ONLY SIGNAL SEGMENT WITH A TARGET-SIGNAL-TO-INTERFERENCE RATIO RESULTING IN A TARGET-PLUS-INTERFERENCE SIGNAL SEGMENT

**306** REQUIRED NUMBER OF TARGET-PLUS-INTERFERENCE SIGNAL SEGMENTS (D) REACHED ?

N

**308** END GENERATING A PLURALITY OF TARGET-PLUS-INTERFERENCE SIGNAL SEGMENTS

**310** CONSTRUCT A TARGET-PLUS-INTERFERENCE DATA SET FROM THE PLURALITY OF TARGET-PLUS-INTERFERENCE SIGNAL SEGMENTS

**312** CONSTRUCT AN ALIGNED TARGET-ONLY DATA SET FROM THE PLURALITY OF TARGET SIGNAL SEGMENTS USED TO GENERATE THE PLURALITY OF TARGET-PLUS-INTERFERENCE SIGNAL SEGMENTS

**314** UPDATE THE MACHINE LEARNING MODEL IN AN ITERATIVE SUPERVISED LEARNING PROCESS WITH A BATCH SELECTED FROM THE TARGET-PLUS-INTERFERENCE DATA SET AND THE TARGET-ONLY DATA SET

300

**FIG. 5**

DETECT VOICE ACTIVITY FROM A VIDEO COMPONENT OF INPUT SIGNAL SEGMENT — 352

ESTIMATE NOISE POWER FROM AT LEAST ONE AUDIO COMPONENT OF INPUT SIGNAL SEGMENT — 354

356 — ESTIMATED NOISE POWER < NOISE POWER THRESHOLD VALUE ?

N

Y

362 — VOICE ACTIVITY DETECTED ?

358 — VOICE ACTIVITY DETECTED ?

N

Y

N

Y

364 — CLASSIFY AS INTERFERENCE-ONLY SIGNAL SEGMENT

360 — CLASSIFY AS TARGET-ONLY SIGNAL SEGMENT

366 — CLASSIFY AS UNDEFINED SIGNAL SEGMENT

350

FIG.6

402 — START GENERATING A PLURALITY OF TARGET-PLUS-INTERFERENCE SIGNAL SEGMENTS

404 — MIX AUDIO COMPONENT OF SELECTED TARGET-ONLY SIGNAL SEGMENT AND A SELECTED INTERFERENCE-ONLY SIGNAL SEGMENT WITH A TARGET-SIGNAL-TO-INTERFERENCE RATIO

406 — ADD VIDEO COMPONENT OF SELECTED TARGET-ONLY SIGNAL SEGMENT

408 — REQUIRED NUMBER OF TARGET-PLUS-INTERFERENCE SIGNAL SEGMENTS (D) REACHED ?

N

Y

410 — END GENERATING A PLURALITY OF TARGET-PLUS-INTERFERENCE SIGNAL SEGMENTS

412 — CONSTRUCT A TARGET-PLUS-INTERFERENCE DATA SET FROM THE PLURALITY OF TARGET-PLUS-INTERFERENCE SIGNAL SEGMENTS

414 — CONSTRUCT AN ALIGNED TARGET-ONLY DATA SET FROM THE PLURALITY OF TARGET SIGNAL SEGMENTS USED TO GENERATE THE PLURALITY OF TARGET-PLUS-INTERFERENCE SIGNAL SEGMENTS

416 — UPDATE THE MACHINE LEARNING MODEL IN AN ITERATIVE SUPERVISED LEARNING PROCESS WITH A BATCH SELECTED FROM THE TARGET-PLUS-INTERFERENCE DATA SET AND THE TARGET-ONLY DATA SET

400

FIG. 7

452 — RECEIVE DIGITAL AUDIO SIGNAL INCLUDING ONE OR MORE AUDIO PACKETS

454 — AUDIO PACKET CORRECTLY RECEIVED ?

— Y → CLASSIFY AS TARGET-ONLY SIGNAL SEGMENT — 456

N

CLASSIFY AS INTERFERENCE-ONLY SIGNAL SEGMENT — 458

460 — UPDATE PARAMETERS OF PACKET LOSS PATTERN MODEL WITH INTERFERENCE SIGNAL SEGMENT

450

**FIG.8**

502 — CONSTRUCT A TARGET-ONLY SIGNAL DATA SET FROM A PLURALITY OF SELECTED TARGET-ONLY SIGNAL SEGMENTS

504 — CONSTRUCT A TARGET-PLUS-INTERFERENCE DATA SET BY MUTING A SUBSET OF THE PLURALITY OF SELECTED TARGET-ONLY SIGNAL SEGMENTS ACCORDING TO THE PATTERN LOSS PACKET MODEL

506 — UPDATE THE MACHINE LEARNING MODEL IN AN ITERATIVE SUPERVISED LEARNING PROCESS USING A TRAINING BATCH SELECTED FROM THE TARGET-PLUS-INTERFERENCE DATA SET AND THE TARGET-ONLY DATA SET

500

**FIG. 9**

Europäisches
Patentamt

European
Patent Office

Office européen
des brevets

# EUROPEAN SEARCH REPORT

Application Number

EP 23 19 8481

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/107393 A1 (UNIV COLUMBIA [US]; SOFTBANK CORP [JP]) 27 May 2022 (2022-05-27) * paragraph [0004] – paragraph [0005] * * paragraph [0006] – paragraph [0007] * * paragraph [0034] * * paragraph [0011] * * paragraph [0093] * * paragraph [0060] * * paragraph [0057] – paragraph [0058] * | 1-15 | INV. G10L21/0208 ADD. G10L19/005 G10L21/0272 G10L25/30 G10L25/78 |
| A | US 11 146 607 B1 (TANG QIAN-YU [US] ET AL) 12 October 2021 (2021-10-12) * column 1, line 58 – line 62 * * column 12, line 24 – line 25 * | 2,13 | |
| A | AVIV GABBAY ET AL: "Visual Speech Enhancement", ARXIV.ORG, CORNELL UNIVERSITY LIBRARY, 201 OLIN LIBRARY CORNELL UNIVERSITY ITHACA, NY 14853, 23 November 2017 (2017-11-23), XP081506907, * abstract * | 5,6,15 | |

TECHNICAL FIELDS SEARCHED (IPC)

G10L
G06N

The present search report has been drawn up for all claims

| Place of search | Date of completion of the search | Examiner |
|---|---|---|
| The Hague | 31 January 2024 | Stan, Guy-Bart |

EPO FORM 1503 03.82 (P04C01)

## ANNEX TO THE EUROPEAN SEARCH REPORT
## ON EUROPEAN PATENT APPLICATION NO.

EP 23 19 8481

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2024

| Patent document cited in search report | Publication date | Patent family member(s) | Publication date |
|---|---|---|---|
| WO 2022107393 A1 | 27-05-2022 | JP 2023552090 A<br>US 2023306981 A1<br>WO 2022107393 A1 | 14-12-2023<br>28-09-2023<br>27-05-2022 |
| US 11146607 B1 | 12-10-2021 | NONE | |

EPO FORM P0459

For more details about this annex : see Official Journal of the European Patent Office, No. 12/82